# EUROPEAN PATENT APPLICATION

(11) **EP 4 806 752 A1**
(43) Date of publication of application: **16.09.2026**
(21) Application number: 24890599.4
(22) Date of filing: 08.11.2024
(51) Int. Cl.: B60W 60/00, B60W 50/14, B60W 50/02, B60W 50/00

(54) **INTRUSION DETECTION METHOD AND APPARATUS, AND VEHICLE**

(30) Priority: 14.11.2023 CN 202311519004
(71) Applicant: Yinwang Intelligent Technologies Co., Ltd., Shenzhen, Guangdong 518110 (CN)
(72) Inventor: LV, Qi, Shenzhen, Guangdong 518129 (CN); LIU, Shenglin, Shenzhen, Guangdong 518129 (CN)
(74) Representative: Pfenning, Meinig & Partner mbB
(86) International application number: PCT/CN2024/131072
(87) International publication number: WO 2025/103243

(57) **Abstract**

An intrusion detection method and apparatus, and a vehicle are disclosed. The method includes: obtaining first feature data, where the first feature data describes information about a static traffic object related to an area in which a first vehicle is located; obtaining second feature data, where the second feature data describes information about a dynamic traffic object related to the area in which the first vehicle is located; determining, based on the first feature data, the second feature data, and an intrusion detection rule, that an intrusion event occurs, where the intrusion detection rule describes a detection method for an intrusion event associated with a to-be-detected service of the first vehicle; and sending alarm information to an intelligent driving system of the first vehicle, where the alarm information indicates the intrusion event. The method may be used to detect an attack on a vehicle positioning signal, to ensure safe travel of an autonomous vehicle.

## Description

### CROSS-REFERENCE TO RELATED APPLICATIONS

This application claims priority to Chinese Patent Application No. 202311519004.6, filed with the China National Intellectual Property Administration on November 14, 2023 and entitled "INTRUSION DETECTION METHOD AND APPARATUS, AND VEHICLE", which is incorporated herein by reference in its entirety.

### TECHNICAL FIELD

This application relates to the field of vehicle technologies, and in particular, to an intrusion detection method and apparatus, and a vehicle.

### BACKGROUND

Currently, a vehicle implements autonomous driving through an internal autonomous driving system that performs path computation based on a map and vehicle environment information. Safe travel of the autonomous vehicle relies on both perception of surrounding obstacles and centimeter-level positioning of the vehicle on the map via the global navigation satellite system. If a positioning error occurs, the vehicle may veer off a road or proceed in an incorrect direction, leading to a vehicle accident.

An attacker forges a positioning signal to "deceive" an intelligent driving system of the autonomous vehicle, which is one of reasons for a loss of control of the vehicle due to a positioning error of the vehicle. Therefore, how to detect these attack means to ensure safe travel of the autonomous vehicle is still an important problem that urgently needs to be resolved.

### SUMMARY

This application provides an intrusion detection method and apparatus, and a vehicle, to detect an attack on a vehicle positioning signal, thereby ensuring safe travel of an autonomous vehicle.

According to a first aspect, this application provides an intrusion detection method. The method may be performed by an intrusion detection apparatus. The intrusion detection apparatus may be an independent device, or may be a chip or a component in a device, or may be software. The intrusion detection apparatus may be deployed on a vehicle. The vehicle may be a vehicle in a fully manual driving mode, or a vehicle in a fully autonomous driving mode. Alternatively, the vehicle may be configured to be a vehicle in a partially autonomous driving mode. The vehicle in the partially autonomous driving mode, for example, is a vehicle that may control itself while in an autonomous driving mode, and may determine a current status of the vehicle and a surrounding environment via a manual operation, determine a possible behavior of at least one other vehicle in the surrounding environment, and control the vehicle based on the determined information. When the vehicle is in a fully autonomous driving mode, the vehicle may be set to operate without interacting with a person. A product form and a deployment manner of the intrusion detection apparatus are not limited in this application.

The method includes: obtaining first feature data, where the first feature data describes information about a static traffic object related to an area in which a first vehicle is located; obtaining second feature data, where the second feature data describes information about a dynamic traffic object related to the area in which the first vehicle is located; determining, based on the first feature data, the second feature data, and an intrusion detection rule, that an intrusion event occurs, where the intrusion detection rule describes a detection method for an intrusion event associated with a to-be-detected service of the first vehicle; and sending alarm information to an intelligent driving system of the first vehicle, where the alarm information indicates the intrusion event. The to-be-detected service includes a positioning service. In this application, both autonomous driving and intelligent driving are driving behaviors performed by a vehicle under control of an intelligent driving system, and are not distinguished.

According to the foregoing method, the intrusion detection apparatus may perform intrusion detection based on the information about the static traffic object and the information about the dynamic traffic object, thereby preventing an attacker from blocking a location sensor of a vehicle and then forging location information for a spoofing attack. In the method, feature data on which intrusion detection relies is not from the location sensor, so that a wide range of location signal spoofing attacks can be effectively detected without introducing additional hardware costs.

With reference to the first aspect, in a possible design, obtaining the first feature data includes: filtering the first feature data out from N types of third feature data, where the N types of third feature data are obtained by performing perception processing on N types of perception data, the N types of perception data are original perception data collected by N sensors associated with the first vehicle, N is greater than or equal to 1, and the N sensors do not include a location sensor.

According to the foregoing method, feature data on which intrusion detection relies is not from the location sensor but from another sensor device installed on the vehicle, so that a wide range of location signal spoofing attacks can be effectively detected.

With reference to the first aspect, in a possible design, the perception processing includes multi-object detection processing, and the N types of third feature data include a label of an identified traffic object; and filtering the first feature data out from the N types of third feature data includes: filtering the first feature data out from the N types of third feature data based on the label, where the label associated with the first feature data is used to describe the static traffic object.

According to the foregoing method, a plurality of sensors of the vehicle may be used to obtain specific static features of a surrounding environment and a road condition to perform intrusion detection, thereby preventing an attacker from blocking a global positioning system (global positioning system, GPS) signal receiving apparatus and then forging a GPS signal for a spoofing attack.

With reference to the first aspect, in a possible design, the dynamic traffic object includes other vehicles in a first range around the first vehicle, and obtaining the second feature data includes: obtaining the second feature data based on the N types of third feature data, where the second feature data includes a quantity of the other vehicles, the N types of third feature data are obtained by performing the perception processing on the N types of perception data, the N types of perception data are the original perception data collected by the N sensors associated with the first vehicle, and N is greater than or equal to 1.

According to the foregoing method, the plurality of sensors of the vehicle may be used to obtain specific dynamic features of the surrounding environment and the road condition to perform intrusion detection, thereby preventing the attacker from forging a GPS signal based on a location having a similar environment feature.

With reference to the first aspect, in a possible design, the to-be-detected service is associated with location information of the first vehicle, and the intrusion detection rule includes analyzing a difference between information obtained in different manners; and the method further includes: obtaining first location information of the first vehicle by using a positioning component of the first vehicle; and obtaining fourth feature data of the first vehicle from a map server, where the fourth feature data is information that is provided by the map server and that is about a surrounding vehicle of the first vehicle; and determining, based on the first feature data, the second feature data, and the intrusion detection rule, that the intrusion event occurs includes: when a difference between location information determined based on the first feature data and the first location information meets a first condition, and a difference between the second feature data and the fourth feature data meets a second condition, determining that a positioning intrusion event occurs.

According to the foregoing method, a feature for detecting a GPS signal does not come from the GPS signal itself, so that a wide range of GPS signal spoofing attacks can be effectively detected. In addition, only a sensor device and a compute device that are already installed in the autonomous vehicle need to be relied on, and no other hardware support is required, so that no additional hardware costs are caused.

With reference to the first aspect, in a possible design, the first condition includes the following: a similarity between the location information determined based on the first feature data and the first location information is less than or equal to a first threshold; and the method further includes: inputting feature data that is in the first feature data and that is associated with different sensors into M location prediction models, to obtain M location predicted values, where M is greater than 1; and weighting the M location predicted values to obtain the location information determined based on the first feature data, where each of the M location prediction models is used to predict one piece of location information based on feature data obtained by one type of sensor, and the M location prediction models are obtained through training based on samples in a feature library associated with a GPS service. For example, the M location prediction models include a supervised learning model corresponding to at least one of the following types of sensors: a camera, a lidar sensor, a millimeter-wave radar sensor, or an ultrasonic radar sensor.

According to the foregoing method, a plurality of location prediction models may be pre-trained, to predict location information of the vehicle based on original perception data collected by different sensors, and compare the predicted location information with location information collected by the location sensor, to determine whether GPS spoofing exists.

With reference to the first aspect, in a possible design, the fourth feature data includes a reference quantity of the other vehicles in the first range around the first vehicle; and the second condition includes the following: a similarity between the quantity of the other vehicles indicated by the second feature data and the reference quantity of the other vehicles indicated by the fourth feature data is less than or equal to a second threshold.

According to a second aspect, this application provides an intrusion detection apparatus, including: a first obtaining unit, configured to obtain first feature data, where the first feature data describes information about a static traffic object related to an area in which a first vehicle is located; a second obtaining unit, configured to obtain second feature data, where the second feature data describes information about a dynamic traffic object related to the area in which the first vehicle is located; a determining unit, configured to determine, based on the first feature data, the second feature data, and an intrusion detection rule, that an intrusion event occurs, where the intrusion detection rule describes a detection method for an intrusion event associated with a to-be-detected service of the first vehicle; and a communication unit, configured to send alarm information to an intelligent driving system of the first vehicle, where the alarm information indicates the intrusion event.

With reference to the second aspect, in a possible design, the first obtaining unit is configured to filter the first feature data out from N types of third feature data, where the N types of third feature data are obtained by performing perception processing on N types of perception data, the N types of perception data are original perception data collected by N sensors associated with the first vehicle, and N is greater than or equal to 1.

With reference to the second aspect, in a possible design, the perception processing includes multi-object detection processing, and the N types of third feature data include a label of an identified traffic object; and filtering, by the first obtaining unit, the first feature data out from the N types of third feature data includes: filtering the first feature data out from the N types of third feature data based on the label, where the label associated with the first feature data is used to describe the static traffic object.

With reference to the second aspect, in a possible design, the dynamic traffic object includes other vehicles in a first range around the first vehicle, and the second obtaining unit is configured to: obtain the second feature data based on the N types of third feature data, where the second feature data includes a quantity of the other vehicles, the N types of third feature data are obtained by performing the perception processing on the N types of perception data, the N types of perception data are the original perception data collected by the N sensors associated with the first vehicle, and N is greater than or equal to 1.

With reference to the second aspect, in a possible design, the to-be-detected service is associated with location information of the first vehicle, and the intrusion detection rule includes analyzing a difference between information obtained in different manners; and the determining unit is further configured to: obtain first location information of the first vehicle by using a positioning component of the first vehicle; obtain fourth feature data of the first vehicle from a map server, where the fourth feature data is information that is provided by the map server and that is about a surrounding vehicle of the first vehicle; and when a difference between location information determined based on the first feature data and the first location information meets a first condition, and a difference between the second feature data and the fourth feature data meets a second condition, determine that an intrusion event occurs.

With reference to the second aspect, in a possible design, the first condition includes the following: a similarity between the location information determined based on the first feature data and the first location information is less than or equal to a first threshold; and the determining unit is configured to: input feature data that is in the first feature data and that is associated with different sensors into M location prediction models, to obtain M location predicted values, where M is greater than 1; and weight the M location predicted values to obtain the location information determined based on the first feature data, where each of the M location prediction models is used to predict one piece of location information based on feature data obtained by one type of sensor, and the M location prediction models are obtained through training based on samples in a feature library associated with a GPS service.

With reference to the second aspect, in a possible design, the M location prediction models include a supervised learning model corresponding to at least one of the following types of sensors: a camera, a lidar sensor, a millimeter-wave radar sensor, or an ultrasonic radar sensor.

With reference to the second aspect, in a possible design, the fourth feature data includes a reference quantity of the other vehicles in the first range around the first vehicle; and the second condition includes the following: a similarity between the quantity of the other vehicles indicated by the second feature data and the reference quantity of the other vehicles indicated by the fourth feature data is less than or equal to a second threshold.

According to a third aspect, this application provides a communication apparatus, including at least one processor and an interface circuit. The interface circuit is configured to provide data or code instructions for the at least one processor, and the at least one processor is configured to implement, by using a logic circuit or executing the code instructions, the method according to any one of the first aspect and the possible designs of the first aspect.

According to a fourth aspect, this application provides a computer-readable storage medium. The computer-readable storage medium stores program code, and when the program code is run on a computer, the computer is enabled to perform the method according to any one of the first aspect and the possible designs of the first aspect.

According to a fifth aspect, this application provides a computer program product. When the computer program product is run on a computer, the computer is enabled to perform the method according to any one of the first aspect and the possible designs of the first aspect.

According to a sixth aspect, this application provides a chip, including a processor, where the processor is coupled to a memory, and is configured to execute a computer program or instructions stored in the memory. When the computer program or the instructions are executed, the method according to any one of the first aspect and the possible designs of the first aspect is implemented.

According to a seventh aspect, an embodiment of this application provides a vehicle, including a module configured to implement the method according to any one of the first aspect and the possible designs of the first aspect, or the intrusion detection apparatus according to any one of the second aspect and the possible designs of the second aspect.

Based on the implementations provided in the foregoing aspects, embodiments of this application may be further combined to provide more implementations.

For technical effects that can be achieved in any possible implementation of any one of the second aspect to the seventh aspect, refer to descriptions of technical effects that can be achieved in any possible implementation of any one of the first aspect. Repeated details are not described.

### BRIEF DESCRIPTION OF DRAWINGS

FIG. 1 is a diagram of an application scenario to which this application is applicable;
FIG. 2 is diagram of a structure of a vehicle according to this application;
FIG. 3 is a schematic flowchart of an intrusion detection method according to this application;
FIG. 4 is a schematic flowchart of generating a feature library and training a model according to this application;
FIG. 5 is a diagram of a principle of model training according to this application;
FIG. 6 is a schematic flowchart of an intrusion detection method according to this application;
FIG. 7 is a diagram of a prediction process based on a location prediction model according to this application;
FIG. 8 is a diagram of a structure of a communication apparatus according to this application; and
FIG. 9 is a diagram of a structure of a communication device according to this application.

### DESCRIPTION OF EMBODIMENTS

Embodiments of this application provide an intrusion detection method and apparatus, and a vehicle, to detect an attack on a vehicle positioning signal, thereby ensuring safe travel of an autonomous vehicle. The method and the apparatus are based on a same technical concept. Because problem-resolving principles of the method and the apparatus are similar, mutual reference may be made to implementations of the apparatus and the method. Repeated details are not described. In addition, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

An intrusion detection solution in this application may be applied to the internet of vehicles, for example, vehicle to everything (vehicle to everything, V2X), long term evolution-vehicle (long term evolution-vehicle, LTE-V), or vehicle to vehicle (vehicle to vehicle, V2V). For example, the intrusion detection solution may be applied to a vehicle or another apparatus in a vehicle. The another apparatus includes but is not limited to another sensor, for example, a vehicle-mounted terminal, a vehicle-mounted control unit, a vehicle-mounted module, a vehicle-mounted assembly, a vehicle-mounted component, a vehicle-mounted chip, a vehicle-mounted unit, a vehicle-mounted radar, or a vehicle-mounted camera. The vehicle may implement the intrusion detection method provided in embodiments of this application by using the vehicle-mounted terminal, the vehicle-mounted control unit, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the intrusion detection solution in embodiments of this application may be further applied to another intelligent terminal having a movement control function other than the vehicle, or configured on the another intelligent terminal having the movement control function other than the vehicle, or configured on a component of the intelligent terminal. The intelligent terminal may be an intelligent transportation device, a smart home device, a robot, or the like. For example, the intelligent terminal includes but is not limited to an intelligent terminal or another sensor like a control unit, a chip, a radar or a camera in the intelligent terminal, and another component.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" mentioned in embodiments of this application are used to distinguish between a plurality of objects, but are not intended to limit priorities or importance of the plurality of objects.

The following describes embodiments of this application with reference to the accompanying drawings.

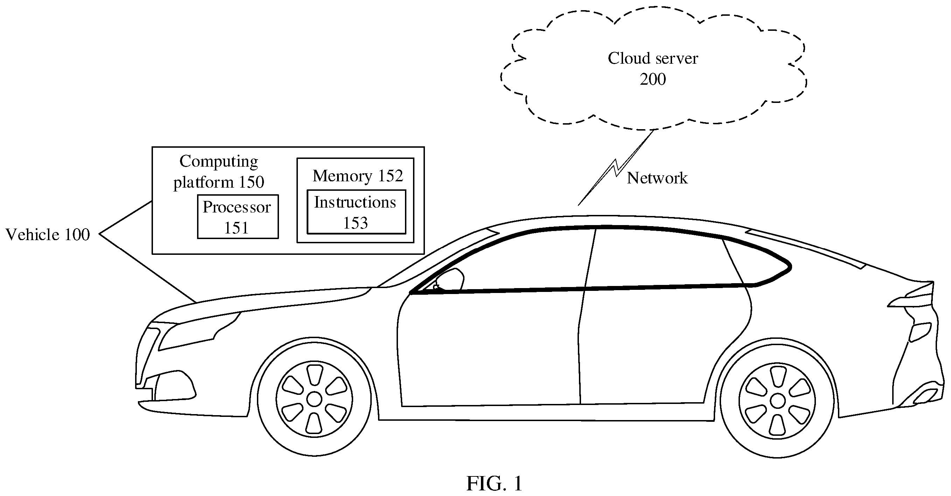

FIG. 1 is a diagram of an application scenario to which an embodiment of this application is applicable. In the application scenario, a vehicle 100 may be included. In a possible implementation, a cloud server 200 may be further included in the application scenario. The vehicle 100 and the cloud server 200 may communicate with each other through a network. In an embodiment, the cloud server 200 may be implemented by using a virtual machine.

Some or all functions of the vehicle 100 are controlled by a computing platform 150 (or referred to as a computer system). The computing platform 150 may include at least one processor 151. The processor 151 may execute instructions 153 stored in a non-transitory computer-readable medium like a memory 152. In some embodiments, the computing platform 150 may alternatively be a plurality of compute devices that control individual components or subsystems of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system on chip (system on chip, SoC), an application-specific integrated circuit (application-specific integrated circuit, ASIC), or a combination thereof.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application. In a possible implementation, the vehicle 100 may be a new energy vehicle.

The structure of the vehicle in FIG. 1 should not be construed as a limitation on this embodiment of this application.

The intrusion detection method in this embodiment of this application may be implemented by an intrusion detection apparatus. The intrusion detection apparatus may be an independent apparatus, or may be a chip or a component in the vehicle 100 shown in FIG. 1, or may be a software module, and may be deployed on a related vehicle-mounted device of the vehicle 100. For ease of understanding and description, the following describes the intrusion detection solution in embodiments of this application by using an example in which the intrusion detection apparatus is a processor of the computing platform 150 integrated in the vehicle 100. In another embodiment, the intrusion detection solution may alternatively be integrated into another electronic control unit (electronic control unit, ECU) of the vehicle, for example, an intelligent driving domain control unit or a vehicle control unit (vehicle control unit, VCU). A product form or a deployment manner of the intrusion detection apparatus is not limited in embodiments of this application.

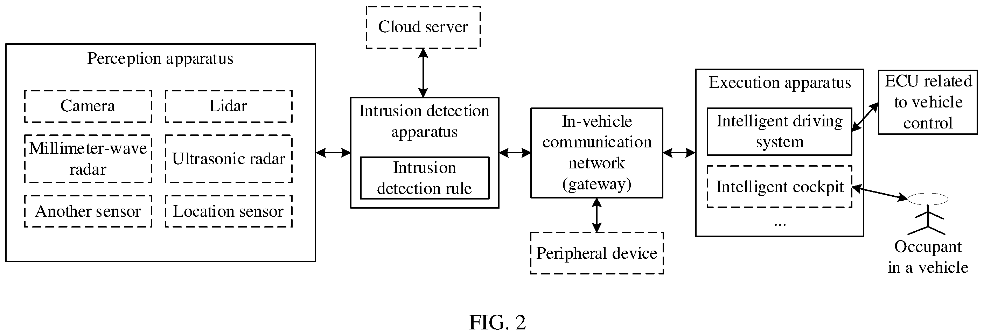

FIG. 2 is a diagram of a possible structure of the vehicle 100. The vehicle 100 may include a perception apparatus, an intrusion detection apparatus, and an execution apparatus.

Refer to FIG. 2. The perception apparatus may obtain perception data of an environment in which the vehicle is located, and keep monitoring and collecting data of an environment around the vehicle at all times. The perception apparatus may include at least one sensor in a sensing system of the vehicle. The sensing system may include but is not limited to a camera (camera), a lidar (light detection and ranging, LIDAR), a millimeter-wave radar (millimeter-wave radar, RADAR), an ultrasonic radar sensor, or another sensor component. The perception data obtained by the sensing system may include: an image or a video of an ambient environment in which the vehicle is currently located, a target object (for example, a traffic object) identified based on the image or the video, a distance (or a spacing) between the vehicle and the identified target object, and the like. Optionally, the sensing system may further include a location sensor. The location sensor may be, for example, a GPS receiver, and may be configured to receive location information of the vehicle.

The perception apparatus may provide the obtained plurality of types of perception data to the intrusion detection apparatus. For example, the perception apparatus may send the plurality of types of perception data to the intrusion detection apparatus through an in-vehicle communication network (for example, a vehicle-mounted bus, which is not shown in the figure).

In an example, the intrusion detection apparatus may have a function of performing perception processing on original perception data, and may obtain a plurality of types of original perception data from various sensors, and perform perception processing on the obtained plurality of types of original perception data to obtain a plurality of types of feature data. The intrusion detection apparatus may filter, out from the obtained plurality of types of feature data, feature data required for performing intrusion detection analysis, for example, including first feature data and second feature data. The first feature data describes information about a static traffic object related to an area in which the vehicle is located, and the second feature data describes information about a dynamic traffic object related to the area in which the vehicle is located. The intrusion detection apparatus may perform intrusion detection analysis based on the first feature data and the second feature data that are obtained through filtering, to determine whether an intrusion event occurs.

In another example, the intrusion detection apparatus may not have a function of performing perception processing on original perception data, but may obtain original perception data from various sensors by using another apparatus (for example, a fusion perception module of an intelligent driving system, which is not shown in FIG. 2), and perform perception processing on the original perception data. The fusion perception module may provide corresponding feature data obtained through the perception processing to the intrusion detection apparatus. For example, the fusion perception module may send the corresponding feature data obtained through the perception processing to the intrusion detection apparatus through the in-vehicle communication network. The intrusion detection apparatus may filter, out from the obtained plurality of types of feature data, feature data required for performing intrusion detection analysis, for example, including first feature data and second feature data. The first feature data describes information about a static traffic object related to an area in which the vehicle is located, and the second feature data describes information about a dynamic traffic object related to the area in which the vehicle is located. The intrusion detection apparatus may perform intrusion detection analysis based on the first feature data and the second feature data that are obtained through filtering, to determine whether an intrusion event occurs.

In this embodiment of this application, the traffic object includes any traffic participant other than the ego vehicle in the area in which the vehicle is located, including but not limited to a current lane of the ego vehicle and a lane line of the current lane; other surrounding vehicles (including a front vehicle and a rear vehicle) of the ego vehicle in the current lane; an adjacent lane of the current lane and a lane line of the adjacent lane; several other vehicles on the adjacent lane; a pedestrian on the current lane, the adjacent lane, or a road intersection; various traffic facilities, for example, a pedestrian crosswalk, a road side unit (road side unit, RSU), a traffic signal light (for example, a motor vehicle signal light, a non-motor vehicle signal light, a pedestrian crosswalk signal light, a direction indicator, a lane signal light, a flash signal light, and a highway-rail grade crossing signal light), a fence, a lighting facility, a line-of-sight guidance sign, a road reflector, and a road information board; and buildings or mountains around the area. Dynamic traffic objects include dynamic traffic participants such as a vehicle and a pedestrian. These dynamic traffic objects move according to a traffic rule over time. Static objects include static traffic participants such as a lane line, a traffic facility, a building, and a mountain. These static traffic objects maintain a state of no change (for example, a location remains unchanged) over a specific time range. That is, the static traffic objects are stationary traffic participants with a low frequency of change, and do not move over time like the dynamic traffic objects.

For example, the perception processing may include but is not limited to performing semantic segmentation processing, multi-object detection processing, and the like on the original perception data. Feature data of different traffic objects around the area in which the vehicle is located, for example, represented as third feature data, may be obtained through the perception processing. The intrusion detection apparatus may filter the first feature data and/or the second feature data out from the plurality of types of third feature data, and perform intrusion detection analysis based on the first feature data and the second feature data that are filtered, to determine whether an intrusion event occurs.

An intrusion detection rule may be preset in the intrusion detection apparatus, and the intrusion detection rule describes a detection method for an intrusion event associated with a to-be-detected service of the vehicle. The intrusion detection apparatus may analyze, by using the feature data obtained through filtering and the intrusion detection rule, whether the intrusion event associated with the to-be-detected service occurs. For example, the intrusion detection rule describes a condition that should be met by different features corresponding to the intrusion event. If the feature data obtained through filtering meets the corresponding condition described in the intrusion detection rule, the intrusion detection apparatus may determine that the intrusion event occurs. If the feature data obtained through filtering does not meet the corresponding condition described in the intrusion detection rule, the intrusion detection apparatus may determine that the intrusion event does not occur.

As an example, the detection method described in the intrusion detection rule may be a method for analyzing whether an intrusion event occurs by comparing the first feature data with reference information corresponding to the first feature data or comparing the second feature data with reference information corresponding to the second feature data. The reference information corresponding to the first feature data may include vehicle location information obtained by using a positioning component (for example, a location sensor) of the vehicle, and the reference information corresponding to the second feature data may include feature data (for example, a quantity of surrounding vehicles) obtained from a map server. If a difference between location information determined based on the first feature data and the vehicle location information obtained by using the positioning component of the vehicle meets a first condition, and a difference between the second feature data and the feature data obtained from the map server meets a second condition, it may be determined that the intrusion event occurs. The first condition, for example, includes the following: a similarity between location information obtained in different manners is less than or equal to a first threshold, and the second condition, for example, includes the following: a similarity between quantities, obtained in different manners, of other surrounding vehicles is less than or equal to a second threshold. The following describes the analysis process in detail with reference to method embodiments. Details are not described herein.

After determining that the intrusion event occurs, the intrusion detection apparatus may send alarm information to the execution apparatus of the vehicle, and the alarm information may indicate the intrusion event. Correspondingly, the execution apparatus may receive the alarm information from the intrusion detection apparatus, and perform vehicle-related control processing with reference to the alarm information, to ensure safe travel of the vehicle.

For example, the to-be-detected service may include an intelligent driving service of the vehicle, the execution apparatus may include the intelligent driving system of the vehicle, and the intrusion event may include an event that an attacker forges location information of the vehicle or forges information about other surrounding vehicles to "deceive" the intelligent driving system of the vehicle. Upon determining, based on analysis of the obtained feature data, that the intrusion event occurs, the intrusion detection apparatus may send the alarm information to the intelligent driving system of the vehicle through a vehicle communication network (for example, a gateway) to indicate the intrusion event, so that the intelligent driving system may perform intelligent driving decision-making (for example, path planning or vehicle control decision-making) with reference to the alarm information, and send a control command to an ECU related to vehicle control, to reduce or even eliminate interference caused by the intrusion event to intelligent driving control decision-making, and assist in controlling safe travel of the vehicle, thereby ensuring the safe travel of the vehicle.

The ECU related to vehicle control may include a motor control unit (motor control unit, MCU), and the MCU may include, for example, a front axle motor control unit (represented as MCU_F) or a rear axle motor control unit (represented as MCU_R). Alternatively, for example, the ECU related to vehicle control may include an electronic stability controller (electronic stability controller, ESC). Alternatively, for example, the ECU related to vehicle control may include a brake system of the vehicle, specifically, for example, an integrated power brake (integrated power brake, IPB). The IPB may be integrated with, for example, an antilock system (antilock brake system, ABS), an ESP, acceleration slip regulation (acceleration slip regulation, ASR) (also referred to as a traction control system). Specific implementation of the ECU related to vehicle control is not limited in embodiments of this application.

In an optional implementation, the execution apparatus may further include an intelligent cockpit of the vehicle. The intelligent cockpit may include a central control display, a head-up display component, a sound system, seat vibration, a light, and the like of the vehicle. The intelligent cockpit may receive the alarm information from the intrusion detection apparatus, and may output the alarm information by using the central control display, the head-up display component, the sound system, the seat vibration, the light, and the like, to provide reference for an occupant (including a driver or another occupant) in the vehicle, thereby assisting the vehicle driver in controlling safe travel of the vehicle, or allowing the another occupant to provide driving assistance for the vehicle driver based on the alarm information.

In another optional implementation, the intrusion detection apparatus may further send, through a gateway, the alarm information to a peripheral device (for example, a mobile intelligent device of a user) associated with the vehicle, to indicate the intrusion event to the user, so that the user can be promptly informed of the intrusion event and come up with a corresponding solution. The description of the execution apparatus or the peripheral device herein is an example rather than any limitation. In another embodiment, the intrusion detection apparatus may further send the alarm information to another vehicle component or an associated device, to promptly detect and resolve the intrusion event. Details are not described herein.

In this embodiment of this application, the intrusion detection rule may be pre-stored in a storage medium accessible to the intrusion detection apparatus. The storage medium may be a local storage device of the vehicle, or may be a cloud server. This is not limited in embodiments of this application. In an optional implementation, an operator may design at least one intrusion detection rule for different attack means in advance based on crowdsourcing data and experience. The intrusion detection apparatus may obtain at least one intrusion detection rule from a cloud server and store the at least one intrusion detection rule as required, or may manually store at least one intrusion detection rule in a local storage device of the vehicle. A manner of obtaining the at least one intrusion detection rule is not limited in embodiments of this application.

In FIG. 2, bidirectional arrows between different modules merely indicate that corresponding modules can communicate with each other, and do not limit any communication manner or information format. Other modules in the vehicle shown in FIG. 2 are merely examples. A dashed box only indicates that a corresponding module is an optional module. The vehicle may not include some modules shown in FIG. 2, or may include modules other than some modules shown in FIG. 2, or some modules in FIG. 2 are replaced with other modules not shown. Details are not described herein again. In some designs, the sensing system of the vehicle may alternatively be integrated into any one of an MDC, a VCU, or a vehicle domain controller (vehicle domain controller, VDC). Product forms or integration manners of different modules of the vehicle are not limited in embodiments of this application.

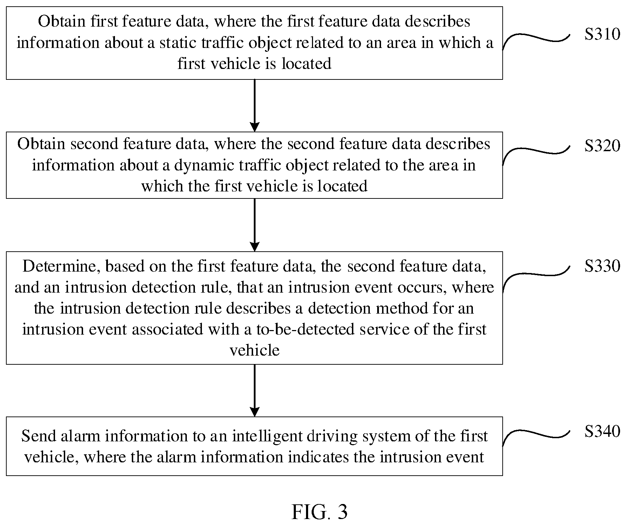

With reference to the system architectures shown in FIG. 1 and FIG. 2, the intrusion detection method in embodiments of this application may be implemented. As shown in FIG. 3, the intrusion detection method may include the following steps.

S310: An intrusion detection apparatus obtains first feature data.

In this embodiment of this application, the first feature data describes information about a static traffic object related to an area in which a first vehicle is located.

The first vehicle is the ego vehicle described above. The static traffic object includes a static traffic participant related to the area in which the first vehicle is located, for example, a lane line, a traffic facility, a building, or a mountain. The information about the static traffic object may include, for example, attribute information of the static traffic object, for example, location information, size information, and shape information. The information about the static traffic object may further include, for example, information about the static traffic object relative to the first vehicle, for example, distance information and azimuth angle information of the static traffic object relative to the first vehicle. Content of the information about the static traffic object is not limited in embodiments of this application.

During implementation of S310, the intrusion detection apparatus may filter the first feature data out from N types of third feature data. The N types of third feature data may be obtained by performing perception processing on N types of perception data. The N types of perception data are road condition information collected by N sensors associated with the first vehicle. The road condition information is, for example, original perception data, and N is greater than or equal to 1.

The perception processing may be performed by the intrusion detection apparatus on the N types of perception data, or the perception processing may be performed by another apparatus on the N types of perception data. This is not limited in embodiments of this application. The perception processing may include but is not limited to performing semantic segmentation processing, multi-object detection processing, and the like on the original perception data. For example, the original perception data includes an image. The N types of third feature data obtained by performing the perception processing may include, for example, an RGB matrix vector of the image and a label corresponding to an identified traffic object in the image. The intrusion detection apparatus may filter the first feature data out from the N types of third feature data based on the label. The label associated with the first feature data is used to describe the static traffic object, for example, a feature of the lane line, a feature of the traffic facility, a feature of the building, or a feature of the mountain.

S320: The intrusion detection apparatus obtains second feature data.

In this embodiment of this application, the second feature data describes information about a dynamic traffic object related to the area in which the first vehicle is located.

The dynamic traffic object includes a dynamic traffic participant related to the area in which the first vehicle is located, for example, other vehicles or pedestrians around the first vehicle. The information about the dynamic traffic object includes, for example, attribute information of the dynamic traffic object, for example, location information, shape information, and size information of the other vehicles. The information about the dynamic traffic object may further include, for example, information about the dynamic traffic object relative to the first vehicle, for example, distance information and azimuth angle information of the dynamic traffic object relative to the first vehicle. Content of the information about the dynamic traffic object is not limited in embodiments of this application.

During implementation of S320, the intrusion detection apparatus may obtain the second feature data based on the N types of third feature data. The N types of third feature data may be obtained by performing the perception processing on the N types of perception data. The N types of perception data are the road condition information collected by the N sensors associated with the first vehicle. The road condition information is, for example, the original perception data, and N is greater than or equal to 1.

The perception processing may be performed by the intrusion detection apparatus on the N types of perception data, or the perception processing may be performed by another apparatus on the N types of perception data. This is not limited in embodiments of this application. The perception processing may include but is not limited to performing semantic segmentation processing, multi-object detection processing, and the like on the original perception data. For example, the dynamic traffic object includes other vehicles around the first vehicle, and the second feature data may include, for example, a quantity of the other vehicles.

S330: The intrusion detection apparatus determines, based on the first feature data, the second feature data, and an intrusion detection rule, that an intrusion event occurs.

In this embodiment of this application, the intrusion detection rule describes a detection method for an intrusion event associated with a to-be-detected service of the first vehicle.

For example, the to-be-detected service is an intelligent driving service of the vehicle, and an execution apparatus includes an intelligent driving system. The intrusion event may include, for example, an event that an attacker forges location information of the vehicle or forges information about other surrounding vehicles to "deceive" the intelligent driving system of the vehicle. The detection method described in the intrusion detection rule may be a method for analyzing whether the intrusion event occurs by comparing the first feature data with reference information corresponding to the first feature data or comparing the second feature data with reference information corresponding to the second feature data.

The reference information corresponding to the first feature data may include first location information that is of the first vehicle and that is obtained by using a positioning component of the first vehicle. The first feature data may be used to determine location information of the first vehicle, which is, for example, represented as second location information. The intrusion detection apparatus may compare the first location information with the second location information to determine whether the intrusion event occurs. The reference information corresponding to the second feature data may include fourth feature data that is of the first vehicle and that is obtained from a map server. The fourth feature data is information that is about a surrounding vehicle of the first vehicle and that is provided by the map server. The second feature data is information that is obtained in a perception-based manner and used to determine the surrounding vehicle of the first vehicle. The intrusion detection apparatus may be configured to compare the second feature data with the fourth feature data to determine whether the intrusion event occurs.

If determining that the intrusion event occurs, the intrusion detection apparatus may further perform the following steps.

S340: The intrusion detection apparatus sends alarm information to the intelligent driving system of the first vehicle, where the alarm information indicates the intrusion event.

Correspondingly, the intelligent driving system may receive the alarm information from the intrusion detection apparatus, and perform vehicle-related control processing with reference to the alarm information, to ensure safe travel of the vehicle. For example, the intelligent driving system may send a control command to an ECU related to vehicle control, so that the ECU related to vehicle control performs braking, steering, acceleration, deceleration, and the like, to assist in controlling safe travel of the vehicle, thereby ensuring the safe travel of the vehicle.

For ease of understanding, the following describes detailed implementations of S310 to S340 with reference to the accompanying drawings and embodiments by using an example in which the to-be-detected service is an intelligent driving service.

Before implementing S310, the intrusion detection apparatus may generate a feature library associated with a GPS service, and obtain M location prediction models through training based on samples in the feature library. The M location prediction models may be used to perform prediction based on the first feature data to obtain the second location information during implementation of S330. The second location information may be used to compare with the first location information that is of the first vehicle and that is obtained by using the positioning component of the first vehicle, to analyze whether the intrusion event occurs.

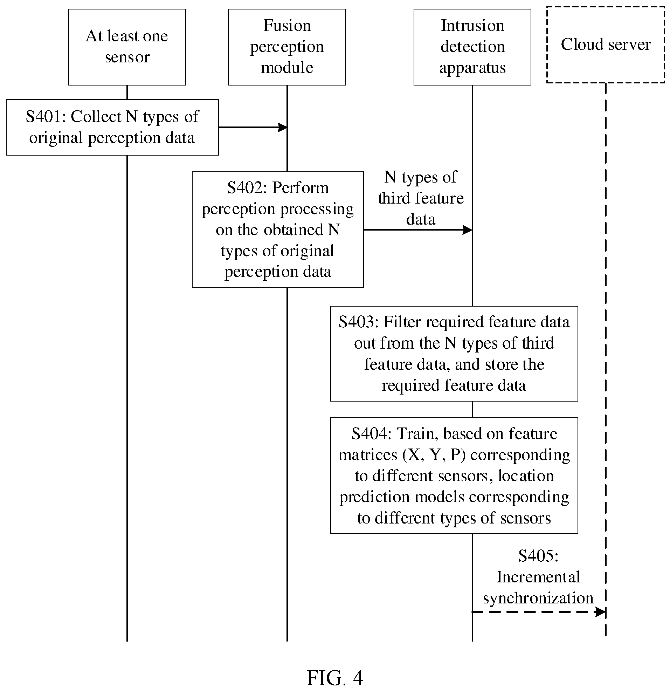

As shown in FIG. 4, an example in which the perception processing is performed on the original perception data by using a fusion perception module of the intelligent driving system is used. A process of generating the feature library associated with the GPS service and a corresponding model training process may include the following steps.

S401: N sensors associated with a first vehicle collect N types of original perception data, and provide the N types of original perception data to a fusion perception module of an intelligent driving system, where N is greater than or equal to 1.

S402: The fusion perception module of the intelligent driving system performs perception processing, for example, semantic segmentation processing and multi-object detection processing, on the obtained N types of original perception data, and provides N types of third feature data obtained through the perception processing to an intrusion detection apparatus.

The N types of third feature data are obtained through the perception processing. The third feature data is a feature matrix, including a sensor feature vector and a label, and is represented as (X, Y), where X represents a sensor feature vector, and Y represents a label of an identified traffic object, for example, a street lamp, a traffic sign, or a ramp entrance.

S403: The intrusion detection apparatus filters required feature data out from the N types of third feature data based on the label, and stores the required feature data, thereby generating the feature library associated with the GPS service. The feature data describes information about a static traffic object related to an area in which the first vehicle is located, and feature data other than the feature data may be discarded.

A feature matrix obtained through filtering may be spliced with corresponding location information (for example, GPS longitude and latitude data) to form a new matrix, which is represented as (X, Y, P), where X represents a sensor feature vector, Y represents a label of an identified traffic object, and P represents GPS longitude and latitude data. Feature matrices (X, Y, P) corresponding to different sensor feature vectors may be used to train location prediction models corresponding to different types of sensors.

S404: The intrusion detection apparatus trains, based on feature matrices (X, Y, P) corresponding to different sensors, location prediction models corresponding to different types of sensors.

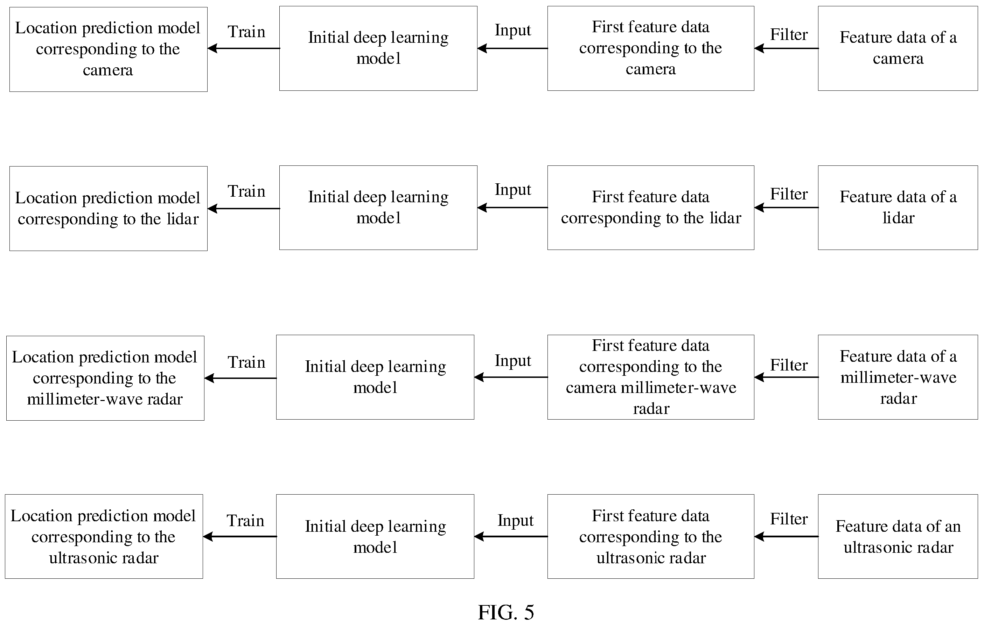

As shown in FIG. 5, the trained M location prediction models include a supervised learning model corresponding to at least one of the following types of sensors: a camera, a lidar sensor, a millimeter-wave radar sensor, or an ultrasonic radar sensor. For example, the supervised learning model is a deep learning model. During training, feature matrices that correspond to different types of sensors and that are obtained through filtering and splicing may be input into corresponding initial deep learning models. After a training process of supervised learning based on a location vector P, location prediction models corresponding to different types of sensors may be obtained, for example, a location prediction model corresponding to a camera, a location prediction model corresponding to a lidar sensor, a location prediction model corresponding to a millimeter-wave radar sensor, or an ultrasonic radar sensor. Each of the M location prediction models is used to predict one piece of location information based on feature data obtained by one type of sensor.

The filtering and training process may be implemented by invoking an interface, similar to a get_models _from_sensors(sensor_name_list) interface, which may use sensor-identified road condition data as an input for deep model training, and output a trained model. Similar to sensor_id _list, which represents an ID list of sensors participating in data input for model training, a similar implementation logic of this interface is formally described as follows:

Let t1, t2, t3, and t4 respectively represent API interfaces of to-be-trained deep learning models corresponding to different sensors, let S1, S2, S3, and S4 respectively represent feature matrices provided by different types of sensors for corresponding deep learning models, Xi represents an input feature vector corresponding to the sensor, Yi represents a label vector, and Pi represents a longitude and latitude data feature vector corresponding to a location, as shown below:
S1 = (X1, Y1, P1), S2 = (X2, Y2, P2), S3 = (X3, Y3, P3), and S3 = (X4, Y4, P4)

Then:
M1 = t1(S1), M2 = t2(S2), M3 = t3(S3), and M4 = t4(S4), where
M1, M2, M3, and M4 respectively represent trained deep learning models.

During specific implementation, ti performs filtering on the input feature vector based on the label vector Yi, thereby obtaining the required information Xi through filtering for describing the static traffic object while discarding an unnecessary feature vector, which does not participate in a model training process.

S405 (optional step): The M location prediction models obtained through training are incrementally synchronized with model data on the cloud server based on a requirement.

That is, the model data that is stored on the cloud server and that is used for location prediction is updated to model data corresponding to the M location prediction models obtained through training.

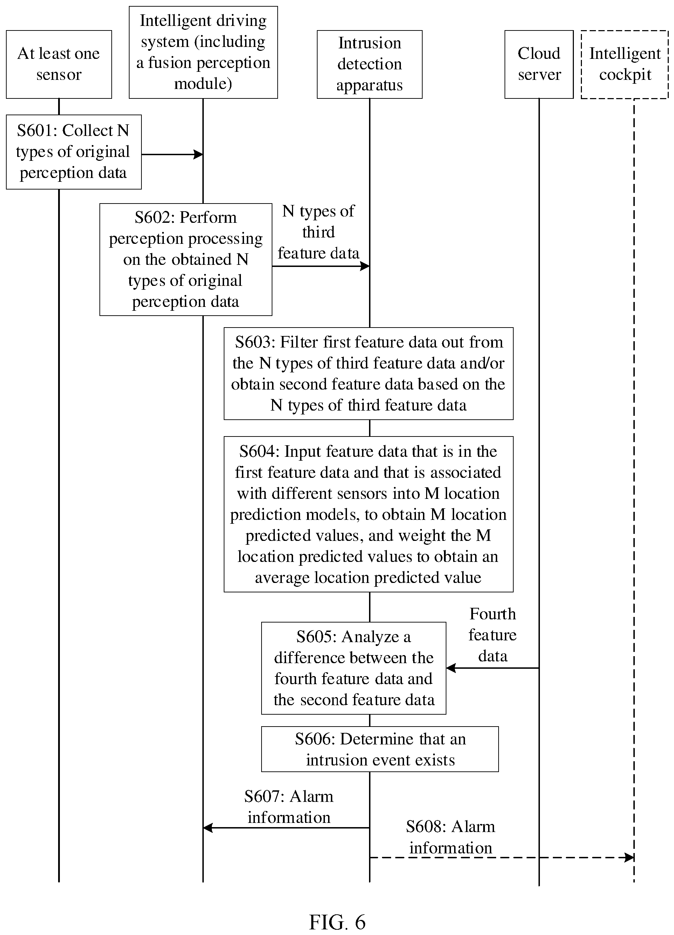

After the M location prediction models are obtained through training based on FIG. 4 and FIG. 5, the method shown in FIG. 3 may be implemented by using the M location prediction models. As shown in FIG. 6, the method may include the following steps.

S601: N sensors associated with a first vehicle collect N types of original perception data, and provide the N types of original perception data to a fusion perception module of an intelligent driving system, where N is greater than or equal to 1.

S602: The fusion perception module of the intelligent driving system performs perception processing, for example, semantic segmentation processing and multi-object detection processing, on the obtained N types of original perception data, and provides N types of third feature data obtained through the perception processing to an intrusion detection apparatus.

The N types of third feature data are obtained through the perception processing. The third feature data is a feature matrix, including a sensor feature vector and a label, and is represented as (X, Y), where X represents a sensor feature vector, and Y represents a label of an identified traffic object, for example, a street lamp, a traffic sign, or a ramp entrance.

S603: The intrusion detection apparatus filters required first feature data out from the N types of third feature data based on the label, where the first feature data describes information about a static traffic object related to an area in which the first vehicle is located, and/or the intrusion detection apparatus obtains second feature data based on the N types of third feature data, where the second feature data includes a quantity of other vehicles.

S604: The intrusion detection apparatus inputs feature data that is in the first feature data and that is associated with different sensors into M location prediction models, to obtain M location predicted values, and weights the M location predicted values to obtain location information determined based on the first feature data, that is, an average location predicted value, which is represented as second location information, where M is greater than 1.

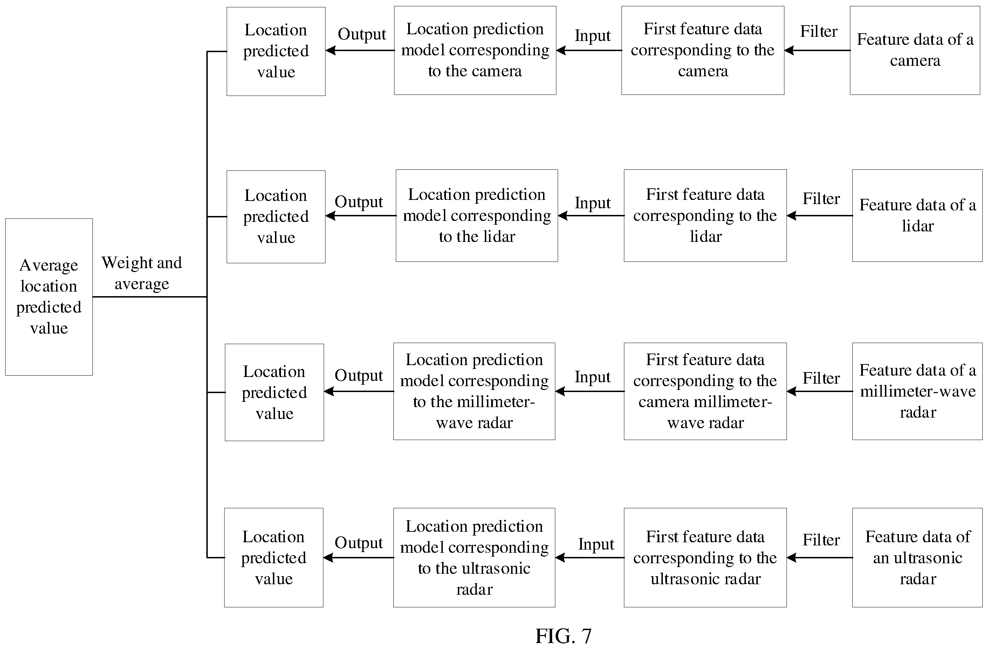

As shown in FIG. 7, (X, Y) is used to represent a feature matrix obtained through filtering, where X represents a sensor feature vector, and Y represents a label of an identified traffic object, for example, a street lamp, a traffic sign, or a ramp entrance. (X, Y) values associated with different sensors are separately input into the M location prediction models, each location prediction model outputs one location predicted value, and weighted averaging is performed on the M location predicted values to obtain an average GPS predicted value, that is, the second location information.

The foregoing prediction process may alternatively be implemented by invoking an interface, similar to a get_pos _from_sensors(sensor_name_list) interface, which represents that sensor-identified road condition data is used as input data and is input into a pre-trained deep learning model, and a predicted value of a corresponding GPS location is output. Similar to sensor_id_list, which represents an ID list of sensors participating in location computing, a similar implementation logic of this interface is formally described as follows:

Let f1, f2, f3, and f4 respectively represent function interfaces corresponding to pre-trained deep learning models corresponding to different sensors, let S1, S2, S3, and S4 respectively represent feature matrices provided by different types of sensors for corresponding deep learning models, Xi represents an input feature vector corresponding to the sensor, Yi represents a label vector, and Pi represents a longitude and latitude data feature vector corresponding to a location, as shown below: $S 1 = \left(X1,Y1\right) , S 2 = \left(X2,Y2\right) , S 3 = \left(X3,Y3\right) , and S 3 = \left(X4,Y4\right)$

Then: $P 1 = f 1 \left(S1\right) , P 2 = f 2 \left(S2\right) , P 3 = f 3 \left(S3\right) , and P 4 = f 4 \left(S4\right) , where$ fi performs filtering on the feature vector Xi based on the label vector Yi, thereby obtaining the required information Xi through filtering for describing the static traffic object while discarding an unnecessary feature vector, which does not participate in a model prediction process.

P1, P2, P3, and P4 respectively represent predicted values of different models for a current location (for example, longitude and latitude data). When weighted averaging is performed on the M location predicted values, the location predicted value P̅ may be represented by using the following expression: $\overline{P} = \frac{{\sum }_{1}^{k} {w}_{i} {p}_{i}}{{\sum }_{1}^{k} {w}_{i}}$

In this embodiment of this application, the foregoing interface may be periodically invoked to generate a series including time and location information, and a sliding window (sliding window) algorithm is used, where a similarity between the location predicted value P̅ and a GPS series received based on a positioning component (for example, a GPS signal receiver) of the first vehicle is computed by using a similarity algorithm within a time window.

For example, the get_pos_from_sensors(sensor_name_list) interface is periodically invoked based on a time series. Within a time window, for example, when a value of time is [202303020605, 202303020606, 202303020607], a series of time and location information (for example, longitude and latitude data) may be generated, which is represented as follows: $\begin{matrix}sensor_position_timing_num \\ \left[\begin{matrix}\left(202303020605, 22.83239514238987, 114.08831784625996\right) , \\ \left(202303020605, 22.819089228869782, 114.10772361277796\right) , \left(\begin{matrix}202303020605 , 22.825155625708 \\ 656 , 114.14154185306363\end{matrix}\right)\end{matrix}\right] .\end{matrix}$

A get_pos_from_gps() interface may be invoked to obtain location information obtained from a location sensor (for example, a GPS signal receiving apparatus). The get_pos_from_gps() interface is periodically invoked in a time-series manner. Within a time window, if a value of time is [202303020605, 202303020606, 202303020607], a series of time and location (longitude and latitude) may be generated, which is represented as follows: 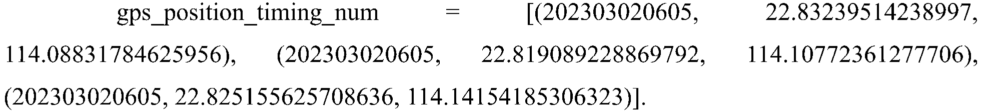 gps_position_timing_num = [(202303020605, 22.83239514238997, 114.08831784625956), (202303020605, 22.819089228869792, 114.10772361277706), (202303020605, 22.825155625708636, 114.14154185306323)].

A get_pos_distance(cloud_cars_timing _num, sensor_cars_timing_num) interface is invoked, to compute a similarity in a time series window. This interface returns a difference timing_pos_distance between two time series. If timing_pos_distance > POS_DISTANCE_THRESHOLD, that is, the similarity is less than or equal to a first threshold, it may be considered that GPS spoofing exists.

S605: The intrusion detection apparatus obtains fourth feature data of the first vehicle from a map server, and analyzes a difference between the fourth feature data and the second feature data.

The fourth feature data is information that is about a surrounding vehicle of the first vehicle and that is provided by the map server. For example, the fourth feature data includes a reference quantity of other vehicles in a first range around the first vehicle. If a similarity between the quantity of the other vehicles indicated by the second feature data and the reference quantity of the other vehicles indicated by the fourth feature data is less than or equal to a second threshold, it may be considered that GPS spoofing exists.

This process may alternatively be implemented by invoking an interface. A related interface is periodically invoked to generate a series of time and a quantity of vehicles, and a sliding window algorithm is used, where a similarity between a quantity of the other vehicles determined based on the perception data and a quantity of the other vehicles obtained from the map server is computed by using a similarity algorithm within a time window.

For example, the intrusion detection apparatus may use an interface similar to get_pos_range_cars(longitude, latitude, range, time) provided by a map service provider, to obtain a quantity of other vehicles around a current location of the first vehicle, where longitude and latitude represent current real-time longitude and latitude information of the first vehicle, the longitude and latitude information is GPS data received by the GPS signal receiving apparatus, range represents a perception range corresponding to the longitude and latitude, for example, a range of 20 m around the first vehicle, and time represents request time. Information returned by the map server is a set of longitude and latitude information, which is represented as follows:
s1 = {(x1, y1), (x2, y2)}, where x and y respectively represent longitude information and latitude information.

The intrusion detection apparatus may implement an interface similar to get_cars_from_map_service(longitude, latitude, range, time, service_id_list) by using an interface similar to get_pos_range_cars, which is configured to obtain, from the map server, information about the other vehicles around the first vehicle, where service_id_list represents an ID list of the map service provider. An implementation logic of this interface may be formally described as follows:

Let s1, s2, and s3 represent return values from invocation interfaces provided by different map service providers: $s 1 = \left\{\left(x1,y1\right), \left(x2,y2\right)\right\} ;$ $s 2 = \left\{\left(x2,y2\right), \left(x3,y3\right)\right\} ;$ and $s 3 = \left\{\left(x1,y1\right), \left(x2,y2\right), \left(x4,y4\right)\right\}$

Then: $s = s 1 ∪ s 2 ∪ s 3 = \left\{\left(x1, y1\right), \left(x2, y2\right), \left(x3, y3\right), \left(x4, y4\right)\right\}$

After union processing, this interface returns a vehicle location set obtained from the map service provider, that is, cars_from_cloud = s.size() = 4. In other words, the quantity of the other vehicles around the first vehicle is 4.

The get_cars_from_map_service(longitude, latitude, range, time, service_id_list) interface is periodically invoked based on a time series. Within a time window, for example, a value of time is [202303020605, 202303020606, 202303020607], a series of time and a quantity of vehicles may be generated, which is represented as follows: 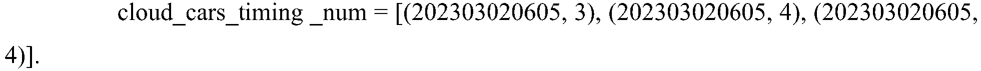 cloud_cars_timing _num = [(202303020605, 3), (202303020605, 4), (202303020605, 4)].

A get_cars_from_sensors(range) interface is periodically invoked based on a time series, which indicates a quantity of the other vehicles identified based on the original perception data around the first vehicle, that is, the second feature data. Within a time window, if a value of time is [202303020605, 202303020606, 202303020607], a series of time and a quantity of vehicles may be generated, which is represented as follows: 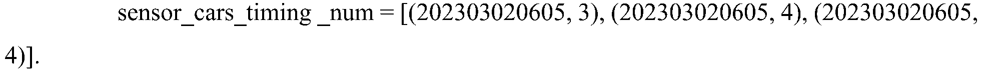 sensor_cars_timing _num = [(202303020605, 3), (202303020605, 4), (202303020605, 4)].

A similar interface get_car_num_distance(cloud_cars_timing _num, sensor_cars_timing _num) for computing a similarity within a time series window is invoked. The interface returns a difference timing_num_distance between two time series. If timing_num_distance > NUM_DISTANCE_THRESHOLD, that is, the similarity is less than or equal to the second threshold, it is considered that GPS spoofing exists.

In this embodiment of this application, the sliding window algorithm used in S605 and S606 may include but is not limited to a piecewise linear represent (piecewise linear represent, PLR) algorithm, a dynamic time warping (dynamic time warping, DTW) algorithm, and the like. Implementation of this algorithm is not limited in embodiments of this application. The similarity algorithm may include but is not limited to a Euclidean distance algorithm, a cosine similarity algorithm, a Minkowski distance algorithm, and the like. Implementation of this algorithm is not limited in embodiments of this application.

S606: The intrusion detection apparatus determines, based on results of S604 and S605, that GPS spoofing exists, that is, an intrusion event exists.

S607: The intrusion detection apparatus sends alarm information to the intelligent driving system, where the alarm information indicates the intrusion event. The intelligent driving system may implement subsequent control processing with reference to the alarm information, to ensure safe travel of the vehicle.

S608 (optional step): The intrusion detection apparatus sends the alarm information to an intelligent cockpit, where the alarm information indicates the intrusion event. The intelligent cockpit may receive the alarm information from the intrusion detection apparatus, and may output the alarm information by using a central control display, a head-up display component, a sound system, seat vibration, a light, and the like, to provide reference for an occupant (including a driver or another occupant) in the vehicle, thereby assisting the vehicle driver in controlling safe travel of the vehicle, or allowing the another occupant to provide driving assistance for the vehicle driver based on the alarm information.

Therefore, according to the foregoing method, a plurality of sensors of the vehicle are used to obtain specific static features of a surrounding environment and a road condition to perform intrusion detection, thereby preventing an attacker from blocking the GPS signal receiving apparatus and then forging a GPS signal for a spoofing attack. In addition, the plurality of sensors of the vehicle are used to obtain specific dynamic features of the surrounding environment and the road condition to perform intrusion detection, thereby preventing the attacker from forging a GPS signal based on a location having a similar environment feature. In the method, a feature for detecting a GPS signal does not come from the GPS signal itself, so that a wide range of GPS signal spoofing attacks can be effectively detected. In addition, only a sensor device and a compute device that are already installed for an autonomous driving function need to be relied on, and no other hardware support is required, so that no additional hardware costs are caused.

In another embodiment, the foregoing intrusion detection method may alternatively be used as a sub-function of another function of the vehicle. For example, in a recommendation system based on location information, the foregoing method is implemented to analyze whether an intrusion event occurs. If an intrusion event occurs, a GPS signal received by a GPS signal receiving apparatus cannot be directly used as real-time positioning information for recommendation, to avoid recommending an incorrect item to a user. In an optional implementation, the location predicted value identified based on the original perception data of the plurality of sensors may be temporarily used as reliable location information for recommendation to the user. After the intrusion event is resolved, a GPS signal received by the GPS signal receiving apparatus may be used as real-time positioning information for recommendation.

An embodiment of this application further provides an intrusion detection apparatus, configured to perform the method performed by the intrusion detection apparatus in the foregoing method embodiments. For related features, refer to the foregoing method embodiments. Details are not described herein again.

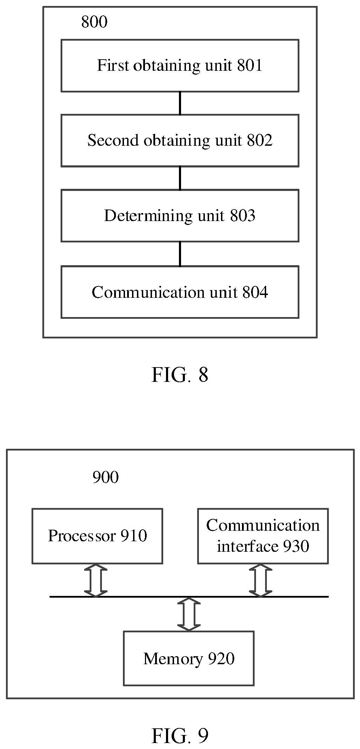

As shown in FIG. 8, the intrusion detection apparatus 800 may include: a first obtaining unit 801, configured to obtain first feature data, where the first feature data describes information about a static traffic object related to an area in which a first vehicle is located; a second obtaining unit 802, configured to obtain second feature data, where the second feature data describes information about a dynamic traffic object related to the area in which the first vehicle is located; a determining unit 803, configured to determine, based on the first feature data, the second feature data, and an intrusion detection rule, that an intrusion event occurs, where the intrusion detection rule describes a detection method for an intrusion event associated with a to-be-detected service of the first vehicle; and a communication unit 804, configured to send alarm information to an intelligent driving system of the first vehicle, where the alarm information indicates the intrusion event. For a specific implementation, refer to the method steps implemented by the intrusion detection apparatus in the foregoing method embodiments. Details are not described herein again.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between the logic gate circuits, to implement the functions of some or all of the foregoing units. All the units of the apparatus may be implemented in a form of software invoked by a processor, or may be implemented in a form of a hardware circuit, or some of the units are implemented in a form of software invoked by a processor, and remaining units are implemented in a form of a hardware circuit.

In embodiments of this application, the processor is a circuit having a signal processing capability. In an implementation, the processor may be a circuit having a capability of instruction reading and running, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It may be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be implemented independently. In an implementation, these units are integrated together and implemented in a form of an SoC. The SoC may include at least one processor, configured to implement any one of the foregoing methods or implement the functions of the units in the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the intrusion detection apparatus in the foregoing embodiments may be in a form shown in FIG. 9.

An apparatus 900 shown in FIG. 9 includes at least one processor 910 and a communication interface 930. In an optional design, a memory 920 may be further included.

A specific connection medium between the processor 910 and the memory 920 is not limited in embodiments of this application.

In the apparatus shown in FIG. 9, when communicating with another device, the processor 910 may transmit data through the communication interface 930.

When the communication apparatus is in the form shown in FIG. 9, the processor 910 in FIG. 9 may invoke computer-executable instructions stored in the memory 920, so that the apparatus 900 can perform any one of the foregoing method embodiments.

This application further provides a vehicle. A structure of the vehicle is shown in FIG. 2, and an intrusion detection apparatus has a structure shown in FIG. 8 or FIG. 9.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor may be coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

For example, in embodiments of this application, the processor is an integrated circuit chip, and has a signal processing capability. For example, the processor may be an FPGA, may be a general-purpose processor, a DSP, an ASIC or another programmable logic device, a discrete gate or a transistor logic device, a discrete hardware component, an SoC, a CPU, a network processor (network processor, NP), a microcontroller unit (microcontroller unit, MCU), a PLD, or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code, and when the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of the claims of this application and their equivalent technologies. In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

## Claims

1. An intrusion detection method, comprising:
obtaining first feature data, wherein the first feature data describes information about a static traffic object related to an area in which a first vehicle is located;
obtaining second feature data, wherein the second feature data describes information about a dynamic traffic object related to the area in which the first vehicle is located;
determining, based on the first feature data, the second feature data, and an intrusion detection rule, that an intrusion event occurs, wherein the intrusion detection rule describes a detection method for an intrusion event associated with a to-be-detected service of the first vehicle; and
sending alarm information to an intelligent driving system of the first vehicle, wherein the alarm information indicates the intrusion event.

2. The method according to claim 1, wherein obtaining the first feature data comprises:
filtering the first feature data out from N types of third feature data, wherein the N types of third feature data are obtained by performing perception processing on N types of perception data, the N types of perception data are original perception data collected by N sensors associated with the first vehicle, and N is greater than or equal to 1.

3. The method according to claim 2, wherein the perception processing comprises multi-object detection processing, and the N types of third feature data comprise a label of an identified traffic object; and filtering the first feature data out from the N types of third feature data comprises:
filtering the first feature data out from the N types of third feature data based on the label, wherein the label associated with the first feature data is used to describe the static traffic object.

4. The method according to any one of claims 1 to 3, wherein the dynamic traffic object comprises other vehicles in a first range around the first vehicle; and obtaining the second feature data comprises:
obtaining the second feature data based on the N types of third feature data, wherein the second feature data comprises a quantity of the other vehicles, the N types of third feature data are obtained by performing the perception processing on the N types of perception data, the N types of perception data are the original perception data collected by the N sensors associated with the first vehicle, and N is greater than or equal to 1.

5. The method according to any one of claims 1 to 4, wherein the to-be-detected service is associated with location information of the first vehicle, and the intrusion detection rule comprises analyzing a difference between information obtained in different manners; and the method further comprises:
obtaining first location information of the first vehicle by using a positioning component of the first vehicle; and
obtaining fourth feature data of the first vehicle from a map server, wherein the fourth feature data is information that is provided by the map server and that is about a surrounding vehicle of the first vehicle; and
determining, based on the first feature data, the second feature data, and the intrusion detection rule, that the intrusion event occurs comprises:
when a difference between location information determined based on the first feature data and the first location information meets a first condition, and a difference between the second feature data and the fourth feature data meets a second condition, determining that a positioning intrusion event occurs.

6. The method according to claim 5, wherein the first condition comprises the following: a similarity between the location information determined based on the first feature data and the first location information is less than or equal to a first threshold; and the method further comprises:
inputting feature data that is in the first feature data and that is associated with different sensors into M location prediction models, to obtain M location predicted values, wherein M is greater than 1; and
weighting the M location predicted values to obtain the location information determined based on the first feature data, wherein
each of the M location prediction models is used to predict one piece of location information based on feature data obtained by one type of sensor.

7. The method according to claim 6, wherein the M location prediction models comprise a supervised learning model corresponding to at least one of the following types of sensors:
a camera, a lidar sensor, a millimeter-wave radar sensor, or an ultrasonic radar sensor.

8. The method according to any one of claims 5 to 7, wherein
the fourth feature data comprises a reference quantity of the other vehicles in the first range around the first vehicle; and
the second condition comprises the following: a similarity between the quantity of the other vehicles indicated by the second feature data and the reference quantity of the other vehicles indicated by the fourth feature data is less than or equal to a second threshold.

9. An intrusion detection apparatus, comprising:
a first obtaining unit, configured to obtain first feature data, wherein the first feature data describes information about a static traffic object related to an area in which a first vehicle is located;
a second obtaining unit, configured to obtain second feature data, wherein the second feature data describes information about a dynamic traffic object related to the area in which the first vehicle is located;
a determining unit, configured to determine, based on the first feature data, the second feature data, and an intrusion detection rule, that an intrusion event occurs, wherein the intrusion detection rule describes a detection method for an intrusion event associated with a to-be-detected service of the first vehicle; and
a communication unit, configured to send alarm information to an intelligent driving system of the first vehicle, wherein the alarm information indicates the intrusion event.

10. A communication apparatus, comprising at least one processor and an interface circuit, wherein the interface circuit is configured to provide data or code instructions for the at least one processor, and the at least one processor is configured to implement, by using a logic circuit or executing the code instructions, the method according to any one of claims 1 to 8.

11. A vehicle, comprising a module configured to implement the method according to any one of claims 1 to 8, or comprising the intrusion detection apparatus according to claim 9.

12. A computer-readable storage medium, wherein the computer-readable medium stores program code, and when the program code is run on a computer, the computer is enabled to perform the method according to any one of claims 1 to 8.
